# EUROPEAN PATENT APPLICATION

(11) **EP 2 051 217 A1**
(43) Date of publication of application: **22.04.2009**
(21) Application number: 07118806.4
(22) Date of filing: 18.10.2007
(51) Int. Cl.: G07F 7/10

(54) **System and method for contactless smart-cards**

(71) Applicant: Orange Personal Communications Services Ltd., Bristol BS32 4QJ (GB)
(72) Inventor: Hum, Peng Jong, London W9 1BE (GB)
(74) Representative: McCann, Heather Alison

(57) **Abstract**

Embodiments of the invention are concerned with smart-card devices and in one aspect provide a mobile communications device for providing a user with access to information relating to authorised take-up of a service for which authorisation is provided using a contactless smart-card device, the mobile communications device comprising:
a personal information manager having a data store comprising a plurality of data fields;
an interface for receiving data from the smart-card device;
a parser arranged to parse the received data so as to identify content therein and to identify, from the parsed content, content portions corresponding to at least some of said plurality of data fields;

wherein the parser is arranged to provide the personal information manager with said identified content portions so as to update the personal information manager with parameters accompanying the taken-up service.

## Description

### Field of the Invention

The present invention relates to a method and system for contactless smart-cards, and is particularly but not exclusively suitable for use in updating a personal information manager on a mobile communications device with data relating to authorised take-up of a service for which authorisation is provided using a contactless smart-card device.

### Background of the Invention

Contactless smart-card technology, commonly referred to as Near Field Communications-based technology, is a popular mechanism for providing access to prepaid goods, services and events. The standards for contactless smart-card communications are ISO/IEC 14443 (2001), which allows communications at distances up to 10 cm and ISO 15693, which allows communications at distances up to 50 cm. Another, related, contactless technology is Radio frequency identification (RFID), and read distances for such RFID tags are typically between 10 cm and several metres. Certain contactless technologies additionally include security protocols for authentication and ciphering in addition to the underlying communications mechanisms. All types of contactless cards are memory storage devices with means for transceiving data and certain types of contactless cards additionally include hardware that can be configured to process data stored thereon. A common contactless smart-card technology is Mifare^{(™)} which, whilst being based upon the ISO 14443 (RFID) Type A 13.56 MHz contactless smart-card standard, is proprietary.

There is a general push in the services and transaction industries to consolidate the various smart-card and personal devices into a single device; accordingly various vendors are working towards providing SIM chips and cards that can store Mifare fare-collection service and other contactless applications in NFC phones. However, a general problem faced by all users of contactless cards is that the transaction data stored thereon can only be viewed when the user is in proximity of a card reader that is enabled to decode the transaction data. Furthermore, the data that can be presented is typically extremely limited and of course the user either has to take the contactless card to the reader in order to view any information stored thereon, or in the case where the transaction has been performed via an internet service, the user has to log onto the internet to review this information.

### Summary of the Invention

In accordance with an aspect the present invention there is provided a method and device according to the appended claims.

With embodiments of the invention a mobile device is configured with software components that retrieve data from a contactless card and translate the data into a format understandable by personal information management systems running on the mobile device. Since contactless cards typically store transaction data relating to goods, services and events taken up by the user of the mobile device, embodiments of the invention therefore provide the user with access to related parameters. This enables a user to become far more informed as to the usage and applicability of the goods, services and events than is possible with current arrangements.

Examples of personal information managers include calendar applications, contacts applications, web-based services, among others. In the case of the calendar application, embodiments of the invention can advantageously be configured to update schedule information to indicate duration of season tickets, passes and the like, and also to prompt the user of the mobile device when expiry of a given ticket or pass is imminent.

The contactless card can be remote from the mobile device, or can be embodied within a Subscriber Identity Module (SIM), in which case the SIM includes a NFC micro-processor or an RF chip and memory for storing the transaction data, or can be embedded within the mobile device or within the battery of the mobile device.

Further features and advantages of the invention will become apparent from the following description of preferred embodiments of the invention, given by way of example only, which is made with reference to the accompanying drawings.

### Brief Description of the Drawings

Figure 1 is a schematic block diagram showing components of a mobile device configured according to an embodiment of the invention;
Figure 2 is a schematic diagram showing a first configuration of a contactless card and the mobile device of Figure 1
Figure 3 is a schematic diagram showing software components configured on the mobile device of Figure 1;
Figure 4a is a schematic diagram showing data stored by the contactless card shown in Figure 2;
Figure 4b is a schematic diagram showing the data of Figure 4a having been translated according to an embodiment of the invention; and
Figure 4c is a schematic diagram showing a calendar personal information manager of the mobile device of Figure 2 configured to display the data of Figure 4a according to an embodiment of the invention.

### Detailed Description of the Invention

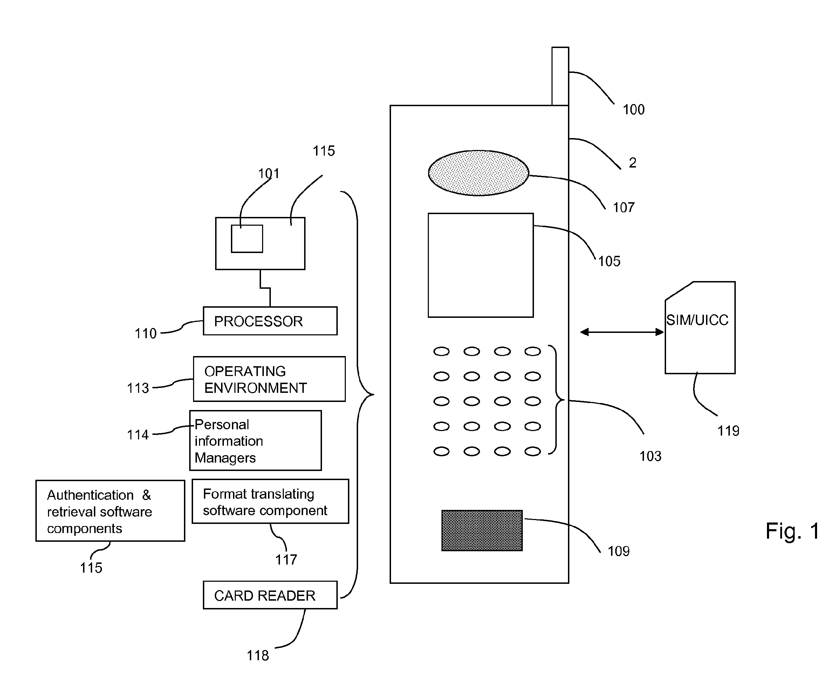

As described above, embodiments of the invention are concerned with providing users of mobile devices with readily understood access to transaction data stored on contactless cards. An example of such a mobile device is shown in Figure 1: the mobile terminal 2 has an antenna 100 for communicating across a radio access layer in a known manner and provides a user interface, having a keypad 103 and display screen 105, a loudspeaker 107 and a microphone 109; alternatively the user interface could comprise components such as touch screens, touch pads and the like. The terminal 2 also comprises a processor 111, an operating environment 113 comprising standard memory, storage and operating system components, together with various standard software applications 114 such as conventional information management, or personal information, applications such as a contacts manager, calendar, a task manager, and the like. Such a personal information manager is executed by the processor 111, may have access to the components of the mobile device 2, and may interact with other software application modules. For instance, interaction with the voice communication software application allows for managing phone calls, voice mails, etc., and interaction with the data communication software application enables for managing SMS (short message service), MMS (multimedia service), e-mail communications and other data transmissions. The operating environment 113 provides a file system to facilitate permanent storage of data items on the device including for example calendar entries, contacts etc. In addition the mobile device is also provided with a smart-card reader 118 of known type for interacting with a removable or non-removable SIM or a UICC 119, which may be provided with a processor, operating environment, and software applications.

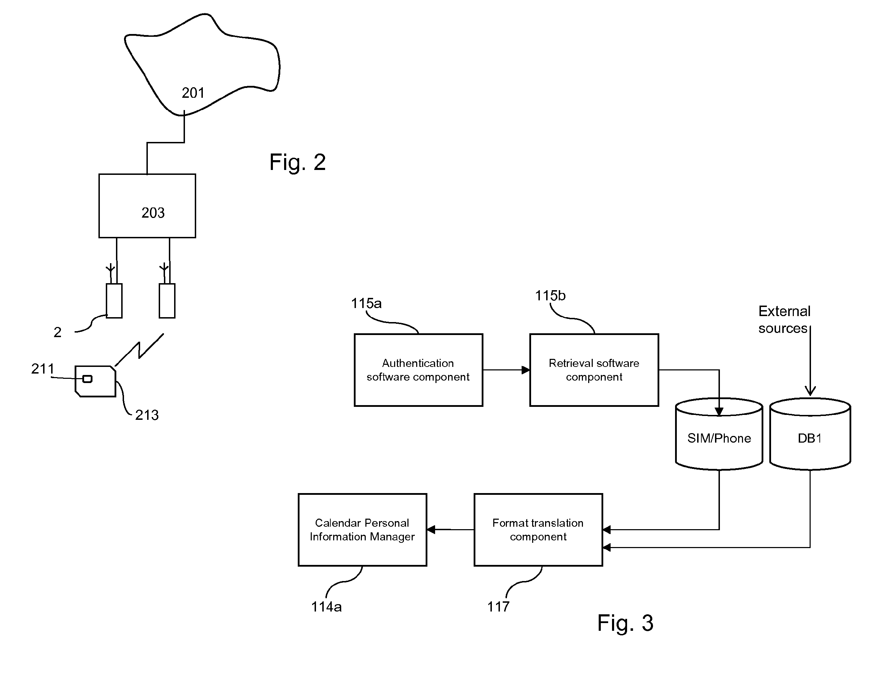

The mobile terminal 2 comprises an input/output interface 115 comprising a cellular interface, a standardized data communications bus and an interface configured to carry short-range communications technologies such as WLAN, Bluetooth and RFID technologies. Turning to Figure 2, the interface 115 enables the mobile device 2 to communicate with other devices via a public land mobile network (PLMNs) 201 in form of e.g. cellular networks, such as GSM (global system for mobile communication) or UMTS (universal mobile telecommunications system). Typically the voice and/or data communication is operated with core network components via a radio interface, i.e. a cellular communication interface to a base station (BS) 203 being part of a radio access network (RAN) of the infrastructure of the cellular network. In addition the mobile device 2 includes a Near Field Communications (NFC) interface 101, which is adapted to transceive data to and from Radio Frequency Identification (RFID) tags such as Mifare Ultralight, Mifare 1k, Mifare 4k, or e.g. ISO 14443-4 tag.

In a first arrangement the mobile device 2 receives data from such a tag 211 on a contactless card 213 (collectively referred to as a smart-card or smart-card module) via the NFC interface 101 and passes the data to bespoke software components 115, 117 under control of the processor 111 and operating environment 113. Data received from such a contactless card 213 will hereinafter be referred to as Mifare data; it is, however, to be understood that this label is used for convenience and is not intended to limit the type of data that are received from contactless cards according to embodiments of the invention. These data are stored on the Mifare card 213 when the user is authorized to use, access or receive goods or services associated with a transaction, such as the purchase of a travel permit, entertainment events, sports events and the like. The transaction can be effected via a medium such as the Internet (e.g. via a web service or the like), resulting in the contactless card 213 being updated remotely, or can be effected directly (e.g. by physically purchasing a service), resulting in the contactless card 213 being updated or issued physically, or through an NFC transaction with an external reader at a Point of Sale (PoS) or contactless kiosk.

Turning to Figure 3, the first bespoke software component 115 includes a polling and authentication software component and a retrieval software component 115a, 115b: the polling and authentication software component 115a is configured to transmit Radio Frequency messages whose purpose is to solicit responses from NFC cards within range. When an NFC card 213 responds to the polling message, the authentication software component 115a requests identification data from the card 213 and compares this with authentication information (e.g. in the form of keys or the like) prestored by the mobile device 2 in order to determine whether or not the mobile device 2 is authorised to read Mifare data from the card 213. Typically the authentication process involves the exchange of keys over a secure channel; this process is well known in the art and outside the scope of the present invention.

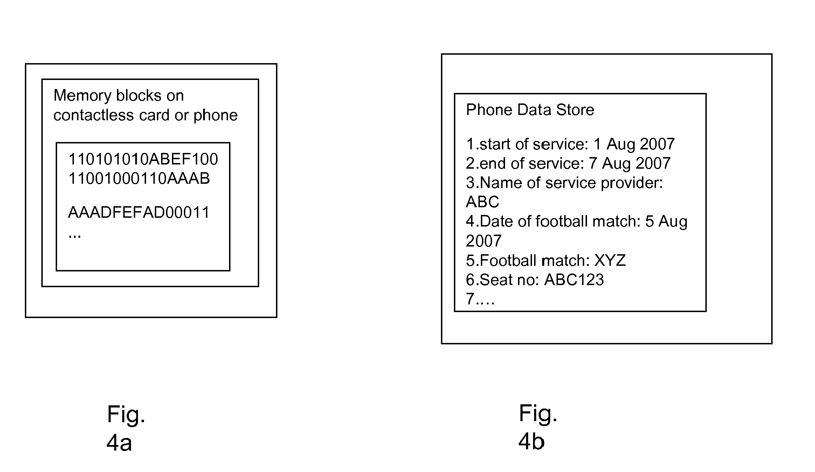

Once authenticated, the retrieval software component 115b is arranged to request Mifare data from the card 213 in accordance with the communications protocol associated with the card 213 (e.g. ISO 14443), and to store the retrieved Mifare data in memory (either phone memory or SIM 119 memory) for further processing by the second bespoke processing component 117. The second bespoke processing component 117 comprises format translation software, which, on the basis of the identity of the card, is arranged to retrieve a set of format translation rules and to parse the data stored in memory using the rules. The format translation rules are stored in a database DB1 local to the mobile device 2 and can be updated by means of control messages delivered independently to the mobile device 2 by card providers e.g. via Over The Air (OTA) messages sent via the cellular network 201. The format translation software 117 interfaces with the personal information manager components 114, using e.g. an Application Programming Interface (API) associated therewith, and is arranged to translate the data extracted from the card 213 into a format suitable for use by one or more of the personal information managers. Figure 4a shows an example of Mifare data retrieved from the card 213, and Figure 4b shows an example of the output from the format translation software component 117: it can be seen that the type of data (transportation, event), dates and other ancillary information have been decoded from the raw Mifare data.

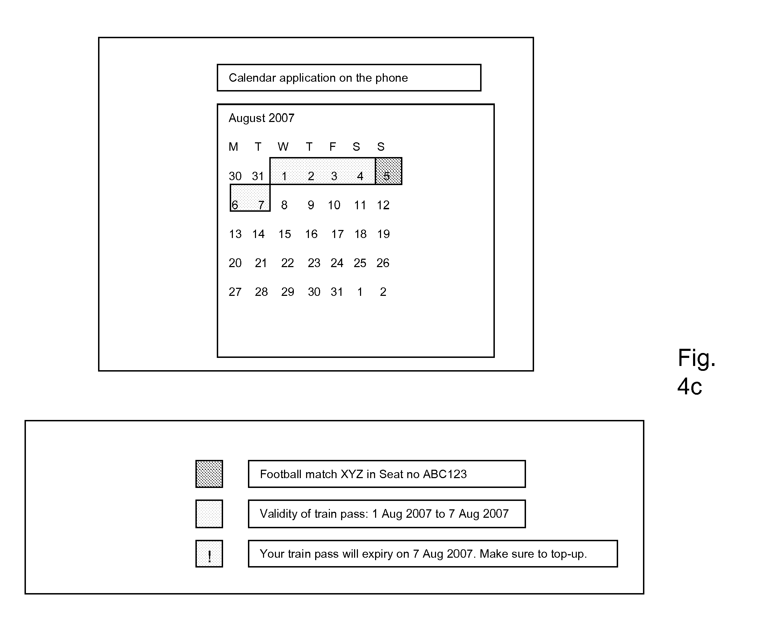

In one embodiment the format translation software component 117 is arranged to create calendar update messages via the calendar API; the update messages comprise instructions for updating scheduling data used by the calendar personal information manager 114a and contain date- and time-related data that have been decoded from the card 213. The calendar update messages can be tagged with display instructions, including colour, formatting, and position information, and these instructions are used by the calendar personal information manager to present the content of the updating messages in accordance with the display instructions. Figure 4c shows an example of a calendar having been updated in accordance with exemplary updating messages received from the format translation software component 117. It will be appreciated that the calendar information manager 114a can be additionally configured to issue reminders to the user when an "end" of a given time period is approaching; in this way the user can be provided with automatically generated reminders that his travel pass (or other service of finite duration) is due to expire. These reminders could, for example, be presented in conjunction with a Wireless Access Protocol (WAP) session linked to a Web-based transaction service from which the user can perform a further transaction (e.g. extend their travel pass; buy tickets to further events etc.).

In addition to interfacing with the calendar personal information manager, the format translation software component 117 can interface with other personal information managers, and selection of an appropriate information manager is dependent on the content of the Mifare data translated by the format translation software component 117. Accordingly the translation software component 117 is preferably arranged to identify key words from the translated Mifare data, and on the basis of prestored rules mapping key words to personal information managers, sends update messages to a selected one (or selected ones) of the personal information manager. For example, in the event that the Mifare data additionally or alternatively comprises data indicative of contact details for a transportation service, the contact details (including web page, phone, fax or email details) could be transferred to the contacts manager via an update message, thereby providing the user with a means to contact to the travel service at a later date.

It will be appreciated that in the first arrangement the smart-card 213 is used to access, e.g. transportation and events, while the mobile device 2 is used to provide the user of the mobile device 2 with information relating thereto.

In a second arrangement the SIM 119 comprises a Mifare chip 211; the transaction data can either be stored on chip 211 or on a portion of the SIM 119 assigned to store the Mifare data. When the transaction data are stored in SIM memory these data will either have been sent to the mobile device 2 via OTA SMS Point-to-Point Download messages transmitted in accordance with GSM TS 03.48 from a service provider (e.g. a transaction manager) and transferred to the SIM in accordance with GSM TS 11.14, or downloaded to the SIM via the NFC interface 101 e.g. at transportation stations equipped with RFID emitting tags or contactless transceivers when the mobile device 2 is within range of the tag or contactless transceivers. When the transaction data are transferred directly to and stored on the chip 211 (rather than in SIM memory), the data can be read by the mobile device 2 from the chip 211 via the NFC interface 101 as described above for the first embodiment. Alternatively the transaction data can be sent by the service provider via OTA messages to the mobile device 2 and stored thereby for use by the retrieval and authentication software components 115, 117.

In any of these arrangements the mobile device 2 is used to access transportation and events, and additionally provides the user with information relating thereto.

The retrieval and authentication software components 115a, 115b can be invoked either in response to successful updates to the SIM with the Mifare data, at specified periods, manually invoked by the user, or in response to the transaction data being stored by the chip 211 (it is to be noted that the process of storing raw Mifare data on the SIM is entirely independent of subsequent access to these data by embodiments of the invention). Irrespective of the trigger, the authentication software component 115a is arranged to exchange authentication data with corresponding information stored on the SIM 119 (either in SIM memory or on the smart-card chip 211); assuming the authentication software 115a to be authorised to access the data, the Mifare data are retrieved by the retrieval software component 115b in accordance with standard challenge and authentication procedures. Once retrieved from the SIM, the data are processed by the format translation software component 117, and personal information managers are updated as described above for the first embodiment.

### Additional Features & Modifications

In one arrangement the authentication and data retrieval software components 115, 117 are configured as phone MIDlets or SIM Applets using readily available J2ME, JCOP (Java Card Open Platform) Operating System, SIM Tool Kit (STK), Java Card, J2SE and J2EE platforms

Whilst the above-embodiments relate to the reading and processing of contactless card data by a mobile device such as a smart phone, the embodiments could be configured on bespoke kiosks or terminals that transceive Mifare data and which, when the data are proximate to the terminal, read and display the data as described above. Such terminals could be conveniently provided at outposts corresponding to a given transaction (e.g. an event location, a transportation station etc.).

Further, whilst embodiments are described within the context of a mobile phone, embodiments could alternatively be configured within laptop devices having 3G modems and 3G device drivers, within Personal Digital Assistants (PDAs), within watches configured with processing resources, within Apple ipod^{(™)} devices, within Apple iphone^{(™)} devices and the like. Each such device requires software and hardware capable of communicating with NFC microprocessors, and memory and processing capability for supporting the authentication, retrieval and formatting processes and for running personal information managers that receive the translated NFC data together with instructions for providing the data to the user.

In addition embodiments of the invention could be used in conjunction with SIM-less mobile phones such as WiFi phones. In such a phone the NFC chip 211 (including micro-processor) could be incorporated as part of the phone battery.

Still further, whilst in the above embodiments the bespoke software components 115, 117 are stored and run on the mobile device 2, they could alternatively be stored and run on the SIM 119 using the STK; in this case the updating messages sent to the personal information managers 114 would be sent from the SIM 119 to the mobile device 2.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A mobile communications device for providing a user with access to information relating to authorised take-up of a service for which authorisation is provided using a contactless smart-card device, the mobile communications device comprising:
a personal information manager having a data store comprising a plurality of data fields;
an interface for receiving data from the smart-card device;
a parser arranged to parse the received data so as to identify content therein and to identify, from the parsed content, content portions corresponding to at least some of said plurality of data fields;
wherein the parser is arranged to provide the personal information manager with said identified content portions so as to update the personal information manager with parameters accompanying the taken-up service.

2. A mobile communications device according to claim 1, wherein the mobile communications device is arranged to select a personal information manager on the basis of the identified content.

3. A mobile communications device according to claim 2, wherein at least some of said content portions correspond to temporal parameters accompanying the taken-up service and the selected personal information manager is arranged to update a schedule for the user with said temporal parameters.

4. A mobile communications device according to claim 3, wherein the selected personal information manager is arranged to update the schedule so as to indicate a period of applicability of said taken-up service.

5. A mobile communications device according to claim 3 or claim 4, wherein said period of applicability comprises an end point and the selected personal information manager is arranged to trigger a notification to the user in advance of said end point.

6. A mobile communications device according to claim 2, wherein at least some of said content portions correspond to contact information associated with the taken-up service and the selected personal information manager is arranged to update contacts data maintained thereby.

7. A mobile communications device according to any one of the preceding claims, in which the contactless smart-card device is integral with a Subscriber Identity Module (SIM) associated with the mobile communications device.

8. A mobile communications device according to claim 7, in which the interface is arranged to identify a radio frequency communications protocol associated with said smart-card device so as to wirelessly retrieve said data from the smart-card device.

9. A mobile communications device according to claim 7, wherein the mobile communications device is arranged to retrieve said data from the smart-card device via a wired connection and contact pads of the SIM.

10. A mobile communications device according to any one of claim 1 to claim 6, in which the smart-card device is located remote from the mobile communications device and the interface is arranged to identify a radio frequency communications protocol associated with said smart-card device so as to wirelessly retrieve said data from the smart-card device.

11. A method of providing a user with access to information relating to authorised take-up of a service for which authorisation is provided using a contactless smart-card device, the method comprising:
receiving an update message including parameters relating to said service; and
in response to said update message, populating a data store for a personal information manager associated with said user, the personal information manager data store including data fields corresponding to said parameters.

12. A method according to claim 11, in which the personal information manager is configured to run on a mobile communications device, said mobile communications device being separate from the smart-card device.

13. A method according to claim 12, in which said update message is received by the mobile communications device via an Over The Air (OTA) message or via Short Message Service (SMS) message.

14. A method according to claim 12, in which said update message is received by the mobile communications device via a Near Field Communications (NFC) interface.

15. A method of configuring data for use in updating a personal information manager running on a mobile communications device, the data being in a first format associated with authorised take-up of a service for which authorisation is provided using a contactless smart-card device, wherein said first format is exclusively machine readable, the method comprising:
parsing the data in the first format so as to identify content therein;
translating at least some of the content to produce translated content; and
using the translated content to update the personal information manager with parameters accompanying the taken-up service.

16. A method according to claim 15, comprising selecting a personal information manager on the basis of the identified content.

17. A method according to claim 16, including using the translated content to create entries in a schedule maintained by the selected personal information manager, the entries being indicative of temporal parameters accompanying the taken-up service.

18. A method according to claim 17, including using the translated content to update the schedule so as to indicate a period of applicability of said taken-up service.

19. A method according to claim 17 or claim 18, wherein said period of applicability comprises an end point and the method includes configuring the selected personal information manager to trigger a notification to the user in advance of said end point.

20. A method according to any one of claim 16, including using the identified content to update contacts data maintained by the selected personal information manager.

21. A method according to any one of claim 16 to claim 20, including translating the content in accordance with formatting requirements associated with the selected personal information manager.

22. A method according to any one of claim 16 to claim 21, in which the contactless smart-card device is integral with a Subscriber Identity Module (SIM) associated with the mobile communications device.

23. A method according to claim 22, further comprising identifying a radio frequency communications protocol associated with said smart-card device so as to wirelessly retrieve said data in the first format from the smart-card device.

24. A method according to claim 22, further comprising retrieving said data in the first format from the smart-card device via a wired connection and contact pads of the SIM.

25. A method according to any one of claim 16 to claim 21, in which the smart-card device is located remote from the mobile communications device and the method further comprises identifying a radio frequency communications protocol associated with said smart-card device so as to wirelessly retrieve said data in the first format from the smart-card device.
